Europäisches Patentamt

European Patent Office

Office européen des brevets

(19)

(11) Veröffentlichungsnummer : **0 217 884 B1**

(12) **EUROPÄISCHE PATENTSCHRIFT**

(45) Veröffentlichungstag der Patentschrift :
06.03.91 Patentblatt 91/10

(51) Int. Cl.⁵ : **G01N 27/12**, G01N 27/22

(21) Anmeldenummer : 86902331.7

(22) Anmeldetag : 14.04.86

(86) Internationale Anmeldenummer :
PCT/DE86/00163

(87) Internationale Veröffentlichungsnummer :
WO 86/06167 23.10.86 Gazette 86/23

(54) EINRICHTUNG ZUR MESSUNG DER RELATIVEN FEUCHTE DER LUFT.

(30) Priorität : 12.04.85 DE 3513065

(43) Veröffentlichungstag der Anmeldung :
15.04.87 Patentblatt 87/16

(45) Bekanntmachung des Hinweises auf die
Patenterteilung :
06.03.91 Patentblatt 91/10

(84) Benannte Vertragsstaaten :
AT BE CH DE FR GB IT LI LU NL SE

(56) Entgegenhaltungen :
FR-A- 2 167 366
GB-A- 1 572 084
GB-A- 2 011 093
US-A- 4 083 249

(73) Patentinhaber : Wilhelm Lambrecht GmbH
Friedländer Weg 65/67
W-3400 Göttingen (DE)

(72) Erfinder : PANG, Shixuan Gästehaus des
Max-Planck-Instituts
für Meteorologie Bundesstrasse 55
W-2000 Hamburg 13 (DE)

(74) Vertreter : Rehberg, Elmar, Dipl.-Ing.
Postfach 3162 Am Kirschberge 22
W-3400 Göttingen (DE)

## Beschreibung

Die Erfindung bezieht sich auf eine Einrichtung zur Messung der relativen Feuchte der Luft, mit den im Oberbegriff des Anspruchs 1 angegebenen Merkmalen.

Derartige Einrichtungen werden beispielsweise in der Meteorologie, der Klimatologie oder der Agrarmeteorologie benötigt. Darüberhinaus gibt es aber auch eine Vielzahl technischer Anwendungen für Einrichtungen zur Messung der relativen Feuchte der Luft, beispielsweise zur Steuerung von Klimaanlagen.

Eine Einrichtung der eingangs beschriebenen Art ist aus der GB-A-2 011 093 bekannt. Der Feuchtigkeitssensor weist zunächst eine Glasplatte als inaktive Trägerschicht auf, auf der zwei als Metallstreifen ausgebildete Meßelektroden aufgebracht sind. Die Meßelektroden werden überdeckt von einer Schicht aus porösem, polymerem Material, welches die eigentliche aktive Meßschicht darstellt. Die Schicht aus porösem Material ist wiederum von einer dampfdurchlässigen Metallschicht abgedeckt. Es liegt damit ein kapazitiver Feuchtigkeitssensor vor, dessen Meßelektroden über je eine elektrische Leitung mit einer Steuereinheit verbunden ist. Es wird die Temperatur sowohl des Feuchtigkeitssensors wie auch die Umgebungstemperatur gemessen. Durch den Meßstrom wird der Feuchtigkeitssensor gleichzeitig beheizt, und zwar auf eine Temperatur oberhalb der Umgebungstemperatur. Mit dieser Heizung des Feuchtigkeitssensors, durch die auch die Schicht aus porösem Material erfaßt wird, soll eine Drift des Ausgangssignals an den Meßelektroden vermieden werden. Die Aufheizung des Feuchtigkeitssensors kann auch auf andere Weise erfolgen als durch den Meßstrom selbst, so auch durch eine externe Strahlungsquelle. Die relative Feuchte wird jedoch durch das Aufheizen der Schicht aus porösem Material nachteilig beeinflußt.

Aus der US-A-4 083 249 ist eine Einrichtung zur Messung der relativen Feuchte bekannt, bei der die hinsichtlich ihrer Feuchte zu messende Luft in Zwangsströmung über einen Feuchtigkeitssensor geführt wird. Der Feuchtigkeitssensor weist auch hier als inaktiver Träger eine Glasplatte auf, die mit einem hydrophoben Film beschichtet ist, auf dem wiederum einzelne Salzpartikel aufgebracht sind. Die Salzpartikel verändern ihre Größe in Abhängigkeit von dem Feuchtigkeitsgehalt. Über eine Laserdiode werden nun die Salzpartikel schräg mit Licht bestrahlt und es sind zwei Detektoren vorhanden, wobei der eine Detektor das von den Salzpartikeln reflektierte Licht und der andere Detektor das unmittelbar von der Laserdiode emittierte Licht aufnimmt. Weiterhin ist eine Heizung für den Feuchtigkeitssensor vorgesehen, die als Infrarot-Diode ausgebildet sein kann. Diese Diode befindet sich im Abstand zu der Rückseite des Feuchtigkeitssensors. Es wird nun solange über diese Infrarot-Diode geheizt, bis sich der Kalibrierzustand wieder einstellt. Die Intensität des Lichts wird gemessen und die Größe der zugeführten Wärme über die Heizung dient als Maß für die relative Feuchte. Auch hiermit wird also der Feuchtigkeitssensor beheizt und damit erwärmt. Eine solche Einrichtung ist insbesondere für sehr große relative Luftfeuchten geeignet.

Beide bekannten Einrichtungen weisen eine große Hysterese auf.

Ferner gibt es noch Feuchtigkeitssensoren, die eine poröse Oberfläche aufweisen, an bzw. in der sich Wasserdampfmoleküle anlagern und somit physikalische Eigenschaften der Sensoren verändern.

Ein Beispiel hierfür sind feuchtempfindliche Kohle-Elemente ; derartige Kohle-Elemente haben jedoch eine außerordentlich große Hysterese. Darüberhinaus sind sie nur eine verhältnismäßig kurze Zeitspanne arbeitsbereit und müssen dann durch neue Elemente ersetzt werden.

Ferner sind Feuchtigkeitssensoren bekannt, bei denen als poröses Material ein Polymer verwendet wird, das das Dielektrikum eines Kondensators bildet. Diese Sensoren werden häufig auch als Feuchte-Sensor-Chips bezeichnet.

Auch diese Sensoren zeigen eine starke Hysterese : Unter verschiedenen Temperaturbedingungen unterscheiden sich bei glei-cher relativer Feuchte die Meßwerte ganz erheblich. Insbesondere bilden sich bei diesen bekannten Feuchte-Sensor-Chips je nach Luftfeuchte und Temperatur auf der Oberfläche kleine Wassertröpfchen, die die Messung verfälschen. Darüberhinaus zeigen diese Sensoren bei gleichbleibenden Bedingungen eine starke Drift des Meßsignals.

Deshalb weisen verschiedene im Handel erhältliche Sensor-Chips einen Miniatur-Heizkörper auf, der den gesamten Sensor-Chip erwärmt. Hierdurch läßt sich jedoch die Hysterese sowie der störende Einfluß der Umgebungstemperatur nur unbefriedigend beseitigen. Auch können durch den Miniatur-Heizkörper Meßfehler erzeugt werden.

## Darstellung der Erfindung

Der Erfindung liegt die Aufgabe zugrunde, eine Einrichtung zur Messung der relativen Feuchte der Luft anzugeben, die die Messung der relativen Feuchte der Luft über den in der Atmosphäre vorkommenden Temperaturbereich, also auch unterhalb des Gefrierpunkts von Wasser, bei praktisch unbedeutender Hysterese gestattet, und insbesondere bei hohen Feuchten keine nennenswerte Drift aufweist.

Erfindungsgemäß wird dies durch die im Anspruch 1 angegebenen Merkmale erreicht.

Es ist erkannt worden, daß die Ursache für die bei den bekannten Einrichtungen gemäß dem Oberbegriff des Patentanspruchs 1 auftretende Hysterese die in den Poren des porösen Materials befindlichen kleinen Wassertröpfchen bzw. der an der Oberfläche der Poren anhaftende Wasserfilm ist. Diese Wassertröpfchen verhindern, daß sich ein Gleichgewicht entsprechend der momentanen Luftfeuchte einstellt, und sind darüberhinaus auch die Ursache für das Driften des Meßsignals bei gleichbleibenden Bedingungen.

Damit hat die erfindungsgemäße Einrichtung zur Messung der relativen Feuchte der Luft praktisch keine Hysterese und ist darüberhinaus im gesamten in der Atmosphäre vorkommenden Temperaturbereich einsetzbar. Der unkomplizierte und einfache Aufbau der Einrichtung erlaubt darüberhinaus, sie mit den in der Halbleiter-Technologie üblichen Verfahren zu miniaturisieren. Ferner ist die erfindungsgemäße Einrichtung störungsunanfällig, so daß sie auch unter rauhen Umgebungsbedingungen, beispielsweise in Wetterballons, Radiosonden etc. eingesetzt werden kann.

Durch die besondere Auswahl der Wellenlänge des emittierten Lichts gemäß den Merkmalen des Anspruchs 1 wird also praktisch nur der Wasserdampf, nicht aber der Feuchtigkeitssensor bzw. dessen aus porösem Material bestehende Schicht aufgeheizt. Das poröse Material des Feuchtigkeitssensors sowie die Elektroden absorbieren dagegen die Strahlung nicht. Damit wird die schon sehr geringe Temperaturerhöhung, die der Feuchtigkeitssensor mittelbar erfährt, noch weiter herabgesetzt, so daß sie in der Regel vollständig zu vernachlässigen ist.

Die Strahlungsquelle kann insbesondere Licht im Infrarot-Bereich emittieren. Damit ist es besonders leicht, eine Emissionswellenlänge der Strahlungsquelle so zu wählen, daß bei ihr eine ausgeprägte Absorptionsbande des Wasserdampfs liegt. Durch diese Infrarot-Strahlung wird die Bindung des Wasserfilms an den inneren Oberflächen des porösen Materials so "gelockert", daß sich schnell ein Gleichgewicht zwischen den Wasserdampfmolekülen im Feuchtigkeitssensor einerseits und dem luftfeuchtigkeitsbedingten Angebot an Wassermolekülen in der Atmosphäre andererseits einstellt.

Das poröse Material kann insbesondere polymer sein. Ein solches Material ist für Infrarotstrahlung bestimmter Wellenlängenbereiche praktisch durchlässig.

Viele feuchteabhängige Effekte im porösen Material sind zusätzlich temperaturabhängig ; beispielsweise zeigt das Spannungs-Ausgangssignal eines kapazitiven Sensors (Ansprüche 4 und 5) eine $1/T$-Abhängigkeit (T : absolute Umgebungstemperatur). Diese Abhängigkeit kann selbstverständlich rechnerisch, beispielsweise in einer nachgeschalteten Mikrocomputerschaltung, berücksichtigt werden.

Eine besonders einfache Berücksichtigung dieser Temperaturabhängigkeit erlaubt die im Anspruch 8 enthaltene Weiterbildung. Dabei wird die Temperatur in der Nähe des Feuchtigkeitssensors gemessen. Gemäß Anspruch 9 wird die Strahlungsintensität der Strahlungsquelle in Abhängigkeit von der Umgebungstemperatur verändert. Bei entsprechender Auslegung erhält man ein temperaturunabhängiges Ausgangssignals des Feuchtigkeitssensors, das nur noch von der relativen Feuchte der Luft abhängt.

Weitere Ausbildungen der Einrichtung sind Gegenstand weiterer Unteransprüche.

Die Erfindung wird nachstehend anhand eines bevorzugten Ausführungsbeispiels weiter erläutert und beschrieben. Es zeigen ;

Figur 1a eine schematische Darstellung einer erfindungsgemäßen Einrichtung,

Figur 1b einen erfindungsgemäß verwendeten kapazitiven Feuchtigkeitssensor und

Figur 2 einen Vergleich der mit einem bekannten Feuchtigkeitssensor und mit der erfindungsgemäßen Einrichtung erhaltenen Meßergebnisse.

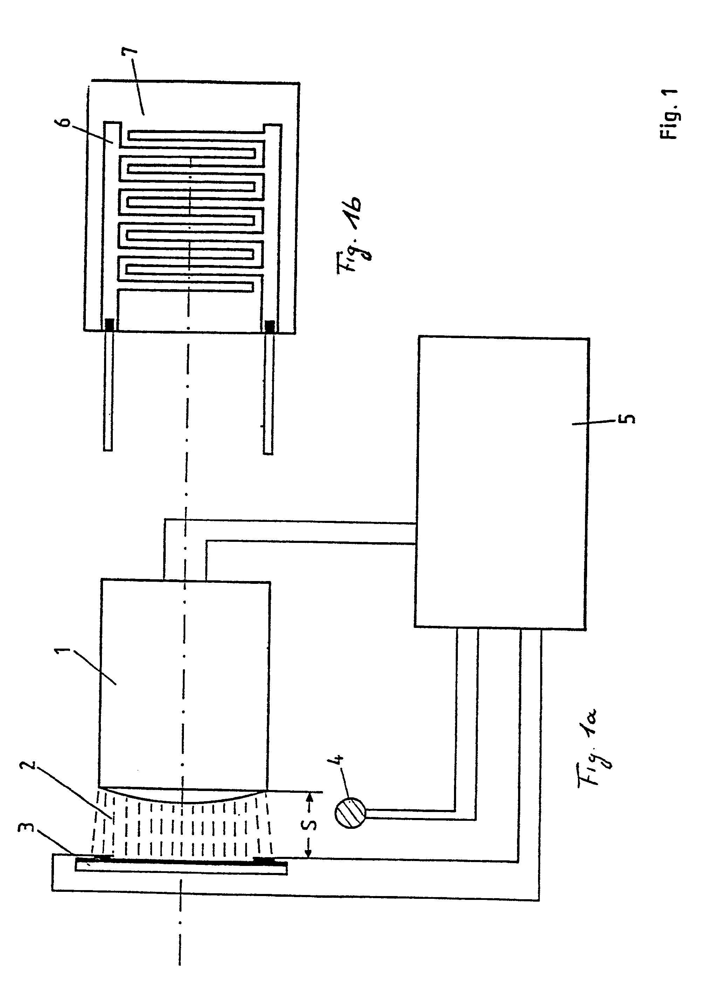

Figur 1a zeigt eine erfindungsgemäße Einrichtung, die aus einer Infrarot-Strahlungsquelle 1 mit einem Strahlungsfeld 2, einem kapazitiven Feuchtigkeitssensor 3, einem Temperaturfühler 4 und einer elektronischen Steuereinheit 5 besteht. Die Strahlungsquelle 1 und der Sensor 3 haben den Abstand S, der so bemessen ist, daß das Strahlungsfeld 2 den gesamten Sensor abdeckt.

Bei dem gezeigten Ausführungsbeispiel ist die Infrarot-Strahlungsquelle 1 eine Leuchtdiode, die schmalbandiges bzw. nahezu monochromatisches Licht mit einer zentralen Wellenlänge von 0,93 μm abgibt. Im Bereich dieser Wellenlängen hat Wasserdampf eine starke Absorptionsbande.

Der Aufbau des kapazitiven Feuchtigkeitssensors 3 ist in fig. 1b näher dargestellt. Der Sensor 3 besteht aus einem porösen Polymermaterial 7, auf bzw. in dem zwei kammartig ineinander geschobene Elektroden 6 vorgesehen sind, die einen Kondensator bilden, dessen "Dielektrikum" das Polymermaterial 7 ist.

Das Material 7 ist so gewählt, daß es für Licht mit der Wellenlänge 0,93 μm nahezu durchlässig ist, so daß das Licht in das Material 7 eindringen kann und von dem auf den Wänden der Poren befindlichen Wasserfilm absorbiert werden kann.

Ferner ist auch das Material der Elektroden 6 so gewählt, daß die Elektroden durch die IR-Strahlung nicht aufgeheizt werden : Insbesondere können die Elektroden 6 für die IR-Strahlung reflektierend ausgelegt sein.

Der Temperaturfühler 4 ist in der unmittelbaren Nachbarschaft des Sensors 3 angeordnet und bestimmt die Temperatur der Umgebung des Sensors 3 und damit des Sensors 3 selbst. Bei einer integrierten Ausführung der Strahlungsquelle 1 und des Sensors 3 kann der Temperaturfühler 4 beispielsweise auf dem gleichen Substrat angeordnet sein. Das Ausgangssignal des Temperaturfühler 4, das bevorzugt proportional zur Temperatur ist, wird zur Korrektur eventueller Temperaturabhängigkeiten des Sensors 3 verwendet.

Die Steuereinheit 5 berechnet nicht nur aus dem Ausgangssignal des Sensors 3 die relative Feuchte der Luft, sondern bestimmt auch aus dem Ausgangssignal des Temperaturfühlers 4 die Umgebungstemperatur T und beaufschlagt die Strahlungsquelle 1 mit Strom, um diese zu einer bestimmten Strahlungsintensität anzuregen. Die Steuereinheit 5 kann dabei in an sich bekannter Weise einen Mikrocomputer oder eine Analogschaltung aufweisen, so daß auf ihren Aufbau nicht näher eingegangen werden muß.

Für die Spannungsabnahme $\Delta U_{out}$ des in Fig. 1b dargestellten kapazitiven Feuchtigkeitssensors 3 als Funktion der relativen Feuchte RH in % gilt ohne Rückkoppelung :

$$\Delta U_{out} = - K_1 * (RH\%) / T$$

Dabei ist T die absolute Umgebungstemperatur und $K_1$ 1 eine Konstante für eine gegebene IR-Strahlung.

Dieser Gleichung ist zu entnehmen, daß es möglich ist, das Spannungssignal des erfindungsgemäßen Sensors unabhängig von der Temperatur zu linearisieren, wenn die Steuereinheit 5 die Strahlungsintensität proportional zur Temperatur T variiert.

Bei stark schwankenden Umgebungsbedingungen kann es jedoch vorteilhaft sein, auf die Linearität des Ausgangssignal zu verzichten, und die Strahlungsintensität der Leuchtdiode 1 auch in Abhängigkeit vom Ausgangssignal des Sensors 3 zu regeln. Dann erhält man für die Spannungsabnahme $\Delta U_{out}$ des Ausgangssignals des Sensors 3 als Funktion der Feuchte

$$\Delta U_{out} = - K_2 * (RH\%)^2 / T$$

Hierbei ist $K_2$ eine andere Konstante. Die zeitliche Stabilität einer derart rückgekoppelten Einrichtung ist besser als die einer nicht rückgekoppelten Einrichtung.

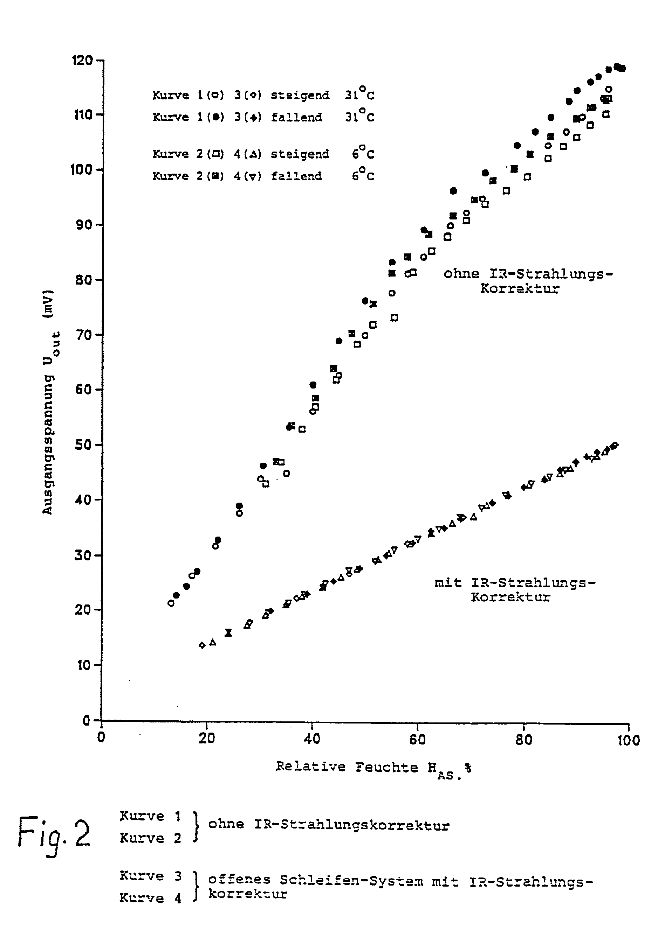

Fig. 2 zeigt einen Vergleich der Meßergebnisse einer erfindungsgemäßen Einrichtung mit einem handelüblichen Feuchtigkeitssensor ohne "monochromatische" IR-Diode. Wie man sieht, hat die erfindungsgemäße Einrichtung eine hervorragende Linearität ohne Hysterese. Ferner zeigt die erfindungsgemäße Einrichtung keine Drifterscheinungen bei konstanten Bedingungen. Die Daten sind im einzelnen in Fig. 2 angegeben, auf die ausdrücklich Bezug genommen wird.

Vorstehend ist die Erfindung anhand von Ausführungsbeispielen ohne Beschränkung der Allgemeinheit beschrieben worden. Innerhalb des allgemeinen Erfindungsgedankenszur Beseitigung der Hysterese eine Infrarot-Strahlungsquelle mit einem Feuchtigkeitssensor aus einem porösen Material zu kombinieren -sind natürlich die verschiedensten Abwandlungen möglich :

Beispielsweise ist es möglich die verschiedensten porösen Materialien zu verwenden : Brauchbare Materialien werden beispielsweise von der Phys.-Chemical Research Corp., New York, der Rotronic Comp., Zürich, E.T.I. (Worthing, Sussex), Corel (Lyon) hergestellt. Bei verschiedenen Materialien ist es möglich, daß die Wellenlänge der verwendeten Strahlung stark von den vorstehend angegebenen Werten in Richtung auf den Mikrowellenbereich oder sogar auf den Ultravioletten Bereich abweicht.

**Ansprüche**

1. Einrichtung zur Messung der relativen Feuchte der Luft, mit einem Feuchtigkeitssensor (3), der eine Schicht (7) aus porösem Material aufweist, bei dem sich mindestens eine meßbare Eigenschaft als funktion der Feuchte ändert und auf dem Meßelektroden (6) angeordnet sind, und mit einer Strahlungsquelle (1) zur Vermeidung der Drift des Ausgangssignals al den Meßelektroden (6), dadurch gekennzeichnet, daß die Strahlungsquelle (1) schmalbaldiges Licht mit einer solchen Wellenlänge emittiert, bei der in dem porösen Material eingelagerter Wasserdampf eine ausgeprägte Absorptionsbande hat, während das poröse Material für diese Wellenlänge keine ausgeprägte Absorptionsbande aufweist.

2. Einrichtung nach Anspruch 1, dadurch gekennzeichnet, daß die Strahlungsquelle (1) Licht im Infrarot-Bereich emittiert.

3. Einrichtung nach einem der Ansprüche 1 und 2, dadurch gekennzeichnet, daß das poröse Material ein Polymer ist.

4. Einrichtung nach einem der Ansprüche 1 bis 3, dadurch gekennzeichnet, daß der Feuchtigkeitssensor (3) ein kapazitiver Sensor ist, dessen Dielektrikum aus dem porösen Material besteht.

5. Einrichtung nach Anspruch 4, dadurch gekennzeichnet, daß ein Umsetzer vorgesehen ist, der den Kapazitätswert des Feuchtigkeitssensors in ein Spannungssignal umsetzt.

6. Einrichtung nach einem der Ansprüche 1 bis 4, dadurch gekennzeichnet, daß der Feuchtigkeitssensor ein resistiver Sensor ist.

7. Einrichtung nach einem der Ansprüche 1 bis 6, dadurch gekennzeichnet, daß die Strahlungsintensität der Infrarot-Strahlungsquelle in Abhängigkeit von der Umgebungstemperatur (T) steuerbar ist.

8. Einrichtung nach einem der Ansprüche 1 bis 7, dadurch gekennzeichnet, daß in der Nähe des Feuchtigkeitssensors (3) ein Temperaturfühler (4) angeordnet ist.

9. Einrichtung nach Anspruch 8, dadurch gekennzeichnet, daß eine elektronische Steuereinheit (5) die Intensität in Abhängigkeit von der Umgebungstemperatur steuert.

10. Einrichtung nach Anspruch 9, dadurch gekennzeichnet, daß die elektronische Steuereinheit (5) die Intensität zusätzlich in Abhängigkeit vom Ausgangssignal des Sensors steuert.

11. Einrichtung nach einem der Ansprüche 1 bis 10, dadurch gekennzeichnet, daß Meßelektroden (6) auf bzw. in dem porösen Material des Feuchtigkeitsensors (3) vorgesehen sind, die so ausgebildet sind, daß sie die Infrarot-Strahlung (2) nicht absorbieren.

12. Einrichtung nach Anspruch 1, dadurch gekennzeichnet, daß die Meßelektroden (6) die einfallende Strahlung reflektieren.

13. Einrichtung nach einem der Ansprüche 1 bis 12, dadurch gekennzeichnet, daß die Infrarot-Strahlungsquelle ein Halbleiterlaser ist.

14. Einrichtung nach einem der Ansprüche 1 bis 12, dadurch gekennzeichnet, daß die Infrarot-Strahlungsquelle eine Leuchtdiode ist.

15. Einrichtung nach Anspruch 1, dadurch gekennzeichnet, daß ein Filter zur Begrenzung der emittierten Wellenlänge vorgesehen ist.

16. Einrichtung nach einem der Ansprüche 1 bis 15, dadurch gekennzeichnet, daß die Strahlung im Bereich der Wellenlänge 0,93 μm emittiert wird.

17. Einrichtung nach einem der Ansprüche 1 bis 16, dadurch gekennzeichnet, daß der Feuchtigkeitssensor ein handelsüblicher kapazitiver Feuchtigkeitssensor ist.

## Claims

1. Device for measuring the relative humidity of air, with a moisture sensor (3), which has a layer (7) of porous material, of which at least one measurable characteristic varies as a function of the humidity and on which measuring electrodes (6) are arranged, and with a radiation source (1) for the avoidance of drift of the output signal at the measuring electrodes (6), characterized in that the radiation source (1) emits narrow-band light at a wavelength at which water vapour entrapped in the porous material has a pronounced absorption band, while the porous material does not have a pronounced absorption band for this wavelength.

2. Device according to Claim 1, characterized in that the radiation source (1) emits light in the infrared range.

3. Device according to one of Claims 1 and 2, characterized in that the porous material is a polymer.

4. Device according to one of Claims 1 to 3, characterized in that the moisture sensor (3) is a capacitive sensor, the dielectric of which consists of the porous material.

5. Device according to Claim 4, characterized in that a converter is provided, which converts the capacitance value of the moisture sensor into a voltage signal.

6. Device according to one of Claims 1 to 4, characterized in that the moisture sensor is a resistive sensor.

7. Device according to one of Claims 1 to 6, characterized in that the radiation intensity of the infrared radiation source can be controlled dependently of the ambient temperature (T).

8. Device according to one of Claims 1 to 7, characterized in that a temperature sensor (4) is arranged in the vicinity of the moisture sensor (3).

9. Device according to Claim 8, characterized in that an electronic control unit (5) controls the intensity dependently of the ambient temperature.

10. Device according to Claim 9, characterized in that the electronic control unit (5) additionally controls the intensity dependently of the output signal of the sensor.

11. Device according to one of Claims 1 to 10, characterized in that measuring electrodes (6) are provided on or in the porous material of the moisture sensor (3), which electrodes are designed in such a way that they do not absorb the infrared radiation (2)

12. Device according to Claim 1, characterized in that the measuring electrodes (6) reflect the incident radiation.

13. Device according to one of Claims 1 to 12, characterized in that the infrared radiation source is a semiconductor laser.

14. Device according to one of Claims 1 to 12, characterized in that the infrared radiation source is a light-emitting diode.

15. Device according to Claim 1, characterized in that a filter for limiting the emitted wavelength is provided.

16. Device according to one of Claims 1 to 15, characterized in that the radiation is emitted in the range of the wavelength 0.93 μm.

17. Device according to one of Claims 1 to 16, characterized in that the moisture sensor is a commercially available capacitive moisture sensor.

## Revendications

1. Dispositif de mesure de l'humidité relative de l'air, avec un capteur d'humidité (3) qui présente une couche (7) en matériau poreux, dans lequel au moins une propriété mesurable se modifie en fonction de l'humidité, sur lequel sont disposées des électrodes de mesure (6), et avec une source de rayonnement (1) pour éviter la dérive du signal de sortie sur les électrodes de mesure (6), **caractérisé** en ce que la source de rayonnement (1) émet de la lumière dans une bande étroite avec une longueur d'onde pour laquelle l'eau contenue dans le matériau poreux a une bande d'absorption prononcée, tandis que le matériau poreux ne présente aucune bande d'absorption prononcée pour cette longueur d'onde.

2. Dispositif selon la revendication 1, caractérisé en ce que la source de rayonnement (1) émet de la lumière dans le domaine infrarouge.

3. Dispositif selon une des revendications 1 et 2, caractérisé en ce que le matériau poreux est un polymère.

4. Dispositif selon une des revendications 1 à 3, caractérisé en ce que le capteur d'humidité (3) est un capteur capacitif dont le diélectrique est constitué par le matériau poreux.

5. Dispositif selon la revendication 4, caractérisé en ce qu'il est prévu un convertisseur qui convertit la valeur de la capacité du capteur d'humidité en un signal de tension.

6. Dispositif selon une des revendications 1 à 4, caractérisé en ce que le capteur d'humidité est un capteur résistif.

7. Dispositif selon une des revendications 1 à 6, caractérisé en ce que l'intensité du rayonnement de la source de rayonnement infrarouge peut être commandée en fonction de la température ambiante (T).

8. Dispositif selon une des revendications 1 à 7, caractérisé en ce qu'une sonde de température (4) est disposée à proximité du capteur d'humidité (3).

9. Dispositif selon la revendication 8, caractérisé en ce qu'une unité électronique de commande (5) commande l'intensité en fonction de la température ambiante.

10. Dispositif selon la revendication 9, caractérisé en ce que l'unité électronique de commande (5) commande en outre l'intensité en fonction du signal de sortie du capteur.

11. Dispositif selon une des revendications 1 à 10, caractérisé en ce que des électrodes de mesure (6) sont prévues sur ou dans le matériau poreux du capteur d'humidité (3), et sont constituées de telle sorte qu'elles n'absorbent pas le rayonnement infrarouge (2).

12. Dispositif selon la revendication 1, caractérisé en ce que les électrodes de mesure (6) reflètent le rayonnement incident.

13. Dispositif selon une des revendications 1 à 12, caractérisé en ce que la source de rayonnement infrarouge est un laser semi-conducteur.

14. Dispositif selon une des revendications 1 à 12, caractérisé en ce que la source de rayonnement infrarouge est une diode luminescente.

15. Dispositif selon la revendication 1, caractérisé en ce qu'il est prévu un filtre pour délimiter la longueur d'onde émise.

16. Dispositif selon une des revendications 1 à 15, caractérisé en ce que le rayonnement est émis dans la région de longueur d'onde de 0,93 µm.

17. Dispositif selon une des revendications 1 à 16, caractérisé en ce que le capteur d'humidité est un capteur d'humidité capacitif d'un modèle courant dans le commerce.

Fig. 1a

Fig. 1b

Fig. 1

EP 0 217 884 B1

Kurve 1 (○) 3 (◇) steigend 31°C
Kurve 1 (●) 3 (✦) fallend 31°C

Kurve 2 (□) 4 (△) steigend 6°C
Kurve 2 (■) 4 (▽) fallend 6°C

ohne IR-Strahlungs-
Korrektur

mit IR-Strahlungs-
Korrektur

Fig. 2    Kurve 1 } ohne IR-Strahlungskorrektur
          Kurve 2 }

          Kurve 3 } offenes Schleifen-System mit IR-Strahlungs-
          Kurve 4 } korrektur